(19) Europäisches Patentamt

European Patent Office

Office européen des brevets

(11) **EP 3 900 526 B1**

(12) **FASCICULE DE BREVET EUROPEEN**

(45) Date de publication et mention de la délivrance du brevet:
**04.01.2023 Bulletin 2023/01**

(21) Numéro de dépôt: **21168803.1**

(22) Date de dépôt: **16.04.2021**

(51) Classification Internationale des Brevets (IPC):
**A01K 5/02** *(2006.01)*     **A01K 11/00** *(2006.01)*

(52) Classification Coopérative des Brevets (CPC):
**A01K 5/0283; A01K 5/0275; A01K 11/006**

(54) **INSTALLATION D'ÉLEVAGE D'ANIMAUX TELS QUE DES PORCS ÉVITANT QUE LES ANIMAUX SE NOURRISSENT EN MÊME TEMPS**

TIERZUCHTANLAGE WIE Z. B. FÜR SCHWEINE, DIE EINE GLEICHZEITIGE FÜTTERUNG ALLER TIERE VERHINDERT

FACILITY FOR FARM ANIMALS, SUCH AS PIGS, PREVENTING THE ANIMALS EATING AT THE SAME TIME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.04.2020 FR 2003984**

(43) Date de publication de la demande:
**27.10.2021 Bulletin 2021/43**

(73) Titulaire: **ASSERVA**
**22400 Lamballe (FR)**

(72) Inventeurs:
• **MONSIMERT, Damien**
**22400 Lamballe (FR)**
• **HERSANT, Thibault**
**22400 Lamballe (FR)**
• **ROUXEL, Simon**
**22400 Lamballe (FR)**
• **GLOUX, Audrey**
**22400 Lamballe (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A2- 1 300 074     US-A1- 2014 000 522**

EP 3 900 526 B1

**Description**

DOMAINE TECHNIQUE

La présente invention concerne une installation d'élevage d'animaux tels que des porcs, ainsi qu'un procédé de gestion d'une telle installation d'élevage.

ÉTAT DE LA TECHNIQUE ANTÉRIEURE

Dans une installation d'élevage, les animaux, en particulier les porcs, sont en liberté et se nourrissent à des distributeurs dédiés qui délivrent des rations alimentaires.

Généralement, l'installation comporte un ou plusieurs distributeurs, et chaque distributeur est équipé d'un système d'identification, comme un système RFID (« Radio Frequency Identification » (Identification en radiofréquence)), qui permet d'identifier un élément d'identification (puce RFID) porté par le porc présent devant le distributeur.

L'information captée par le système d'identification, est transmise à une unité de contrôle.

Le distributeur comporte également une auge et un système de distribution qui est commandé par l'unité de contrôle pour distribuer un aliment dans l'auge lorsque l'animal est identifié positivement par le système d'identification.

Une telle installation présente cependant des inconvénients car un climat de compétition s'instaure entre les porcs pour accéder aux auges ce qui peut entraîner des comportements agressifs de certains d'entre eux.

Il est donc nécessaire de trouver un procédé de gestion et une installation d'élevage qui permettent de limiter la compétition pour l'accès aux auges.

Le document EP 1 300 074 A2 décrit une installation d'élevage comportant des distributeurs de rations alimentaires équipés chacun d'un système d'identification, d'une auge et d'un système de distribution commandé par une unité de contrôle quand un animal présent devant l'auge a été identifié. L'unité de contrôle est configurée pour distribuer des rations alimentaires ayant une masse minimale et pour comptabiliser une masse distribuée par animal qui ne doit pas dépasser une masse plafond journalière spécifique pour chaque animal. L'unité de contrôle est configurée pour calculer une valeur de masse d'aliment crédit à un instant donné pour chaque animal en fonction de la masse distribuée et la masse plafond journalière, et prend en compte une période de blocage pendant laquelle un animal s'étant présenté à l'auge ne recevra pas d'aliment afin de limiter la compétition devant les distributeurs. Si la valeur de masse d'aliment crédit à un instant donné pour un animal identifié est inférieure à la masse minimale de distribution, l'unité de contrôle est configurée pour permettre la distribution d'une ration de valeur égale à cette masse minimale.

Le document US 2014/000522 A1 décrit une autre installation de distribution d'aliments qui permet de limiter la compétition d'animaux devant une auge par la prise en compte d'une période de blocage de distribution en cas de conflit à une auge détecté par l'alternance de deux animaux dans un intervalle de temps déterminé.

EXPOSE DE L'INVENTION

Un objet de la présente invention est de proposer une installation d'élevage qui permet de gérer l'afflux des animaux au niveau de l'auge.

À cet effet, est proposée une installation d'élevage d'animaux selon la revendication indépendante 1, chacun portant un élément d'identification, ladite installation comportant :

- une auge équipée d'un capteur permettant de détecter la présence ou l'absence d'aliment dans l'auge,
- un système de distribution agencé pour distribuer des portions d'un aliment dans l'auge,
- un système d'identification permettant de recueillir une information d'identification stockée dans l'élément d'identification,
- une base de données contenant pour chaque animal la masse plafond d'aliment MP autorisée pour ledit animal pour une période donnée $\Delta T$, une masse minimale MM d'une ration, une masse d'aliment crédit MC, et un instant '$T_0$' correspondant au dernier instant auquel l'animal a reçu des aliments, et
- une unité de contrôle en communication avec le capteur de l'auge, le système de distribution, le système d'identification et la base de données, l'unité de contrôle comportant :
- des moyens d'attente et d'identification permettant à l'unité de contrôle à partir des informations délivrées par le système d'identification de détecter si un animal est présent, l'identifier et récupérer les données relatives à l'animal identifié dans la base de données,
- des moyens de mesure permettant à l'unité de contrôle de mesurer le temps '$t$' écoulé depuis l'instant To correspondant à la dernière prise de nourriture dudit animal,
- des premiers moyens de calcul permettant à l'unité de contrôle de calculer une nouvelle valeur de la masse d'aliment crédit MC avec la formule

$$MC(t) = \frac{MP}{\Delta T} * (t - T_0) + MC_0$$

, où $MC_0$ est une masse d'aliment crédit qui reste à consommer à l'instant $T_0$,

- des troisièmes moyens de test permettant à l'unité de contrôle de comparer la masse d'aliment crédit MC à la masse minimale MM,
- des moyens de distribution permettant, dans le cas où la masse d'aliment crédit MC est supérieure à la masse minimale MM, à l'unité de contrôle de commander le système de distribution pour lui faire distribuer une portion d'aliments dans l'auge,

- des deuxièmes moyens de calcul permettant à l'unité de contrôle de calculer une nouvelle valeur de la masse d'aliment crédit MC par soustraction de la masse de la portion distribuée, et
- des moyens de mise à jour permettant à l'unité de contrôle de mettre à jour la valeur de l'instant $T_0$ correspondant à la dernière prise de nourriture avec la valeur de l'instant 't' et de lui affecter la valeur « To+t ».

Ainsi, pour chaque animal, la distribution ne peut pas commencer avant un certain temps après la précédente prise et les animaux se régulent d'eux-mêmes.

Avantageusement, l'unité de contrôle comporte en outre :

- des quatrièmes moyens de test permettant à l'unité de contrôle de déterminer si de l'aliment est présent ou non dans l'auge à partir des informations délivrées par le capteur,
- des cinquièmes moyens de test permettant à l'unité de contrôle à partir des informations délivrées par le système d'identification de vérifier si un animal est présent devant l'auge et le système d'identification, et
- des sixièmes moyens de test permettant à l'unité de contrôle de tester la valeur de la masse d'aliment crédit MC par rapport à 0.

Avantageusement, l'unité de contrôle comporte en outre des premiers moyens de test permettant à l'unité de contrôle de comparer le temps écoulé 't' à la période donnée $\Delta T$, et des premiers moyens d'harmonisation permettant à l'unité de contrôle d'affecter au temps écoulé 't' la valeur de $\Delta T$ lorsque le temps écoulé 't' est supérieur à la période donnée $\Delta T$.

Avantageusement, l'unité de contrôle comporte en outre des deuxièmes moyens de test permettant à l'unité de contrôle de comparer la masse d'aliment crédit MC et la masse plafond d'aliment MP, des deuxièmes moyens d'harmonisation permettant à l'unité de contrôle d'affecter à la masse d'aliment crédit MC la valeur de la masse plafond d'aliment MP lorsque la masse d'aliment crédit MC est supérieure à la masse plafond d'aliment MP.

L'invention propose également un procédé de distribution, selon la revendication indépendante 5, mis en œuvre dans une installation selon l'une des variantes précédentes, ledit procédé de distribution comportant :

- une routine d'attente et d'identification au cours de laquelle l'unité de contrôle détecte si un animal est présent, l'identifie et récupère les données relatives à l'animal identifié dans la base de données,
- une étape de mesure au cours de laquelle l'unité de contrôle mesure le temps 't' écoulé depuis l'instant To correspondant à la dernière prise de nourriture dudit animal,

- une première étape de calcul au cours de laquelle l'unité de contrôle calcule une nouvelle valeur de la masse d'aliment crédit MC avec la formule

$$MC(t) = \frac{MP}{\Delta T} * (t - T_0) + MC_0$$, où $MC_0$ est

une masse d'aliment crédit qui reste à consommer à l'instant $T_0$,

- une troisième étape de test au cours de laquelle l'unité de contrôle compare la masse d'aliment crédit MC ainsi calculée à la masse minimale MM,
- une étape d'arrêt dans le cas où la masse d'aliment crédit MC est inférieure à la masse minimale MM,
- une étape de distribution dans le cas où la masse d'aliment crédit MC est supérieure à la masse minimale MM, et au cours de laquelle l'unité de contrôle commande le système de distribution pour lui faire distribuer une portion d'aliment dans l'auge,
- une deuxième étape de calcul au cours de laquelle l'unité de contrôle calcule une nouvelle valeur de la masse d'aliment crédit MC par soustraction de la masse de la portion distribuée,
- une étape de mise à jour au cours de laquelle l'unité de contrôle met à jour la valeur de l'instant $T_0$ correspondant à la dernière prise de nourriture avec la valeur de l'instant 't' et lui affecte la valeur « $T_0$+t », et
- une routine de boucle au cours de laquelle tant que l'animal est présent, qu'il n'y a pas d'aliment dans l'auge et que la masse d'aliment crédit MC est positive, le procédé de distribution boucle sur l'étape de distribution.

Avantageusement, la routine de boucle comporte à la suite de l'étape de mise à jour :

- une quatrième étape de test au cours de laquelle l'unité de contrôle détermine s'il y a de l'aliment dans l'auge ou non,
- dans le cas où il y a de l'aliment dans l'auge, la routine de boucle se poursuit par une cinquième étape de test au cours de laquelle l'unité de contrôle vérifie si l'animal est toujours présent devant l'auge et le système d'identification,
- dans le cas où l'animal n'est plus présent, la routine de boucle se poursuit par une étape d'arrêt,
- dans le cas où l'animal est présent, la routine de boucle boucle sur la quatrième étape de test,
- dans le cas où il n'y a pas d'aliment dans l'auge, la routine de boucle se poursuit par une sixième étape de test au cours de laquelle l'unité de contrôle teste la valeur de la masse d'aliment crédit MC par rapport à 0,
- dans le cas où la masse d'aliment crédit MC est négative ou nulle, la routine de boucle se poursuit par une étape d'arrêt, et

- dans le cas où la masse d'aliment crédit MC est positive, la routine de boucle boucle sur l'étape de distribution.

Avantageusement, le procédé de distribution comporte à la suite de l'étape de mesure, une première étape de test au cours de laquelle l'unité de contrôle compare le temps écoulé 't' à la période donnée ΔT, et une première étape d'harmonisation au cours de laquelle l'unité de contrôle affecte au temps écoulé 't' la valeur de ΔT lorsque le temps écoulé 't' est supérieur à la période donnée ΔT, et où lorsque le temps écoulé 't' est inférieur à la période donnée ΔT ou après la première étape d'harmonisation, le procédé de distribution se poursuit par la première étape de calcul.

Avantageusement, le procédé de distribution comporte à la suite de la première étape de calcul, une deuxième étape de test au cours de laquelle l'unité de contrôle compare la masse d'aliment crédit MC et la masse plafond d'aliment MP, et une deuxième étape d'harmonisation au cours de laquelle l'unité de contrôle affecte à la masse d'aliment crédit MC la valeur de la masse plafond d'aliment MP lorsque la masse d'aliment crédit MC est supérieure à la masse plafond d'aliment MP, et où lorsque la masse d'aliment crédit MC est inférieure à la masse plafond d'aliment MP ou après la deuxième étape d'harmonisation, le procédé de distribution se poursuit par la troisième étape de test.

BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

Fig. 1 illustre une installation d'élevage selon l'invention,
Fig. 2 illustre schématiquement un exemple d'architecture matérielle d'une unité de contrôle de l'installation d'élevage selon l'invention,
Fig. 3 illustre schématiquement un algorithme d'un procédé de gestion d'une installation d'élevage d'animaux selon l'invention,
Fig. 4 illustre un chronographe représentatif de la distribution d'aliments pour un premier animal, et
Fig. 5 illustre un chronographe représentatif de la distribution d'aliments pour un deuxième animal.

EXPOSÉ DÉTAILLÉ DE MODES DE RÉALISATION

Une installation d'élevage d'animaux selon l'invention permet de nourrir plusieurs animaux, en particulier des porcs.

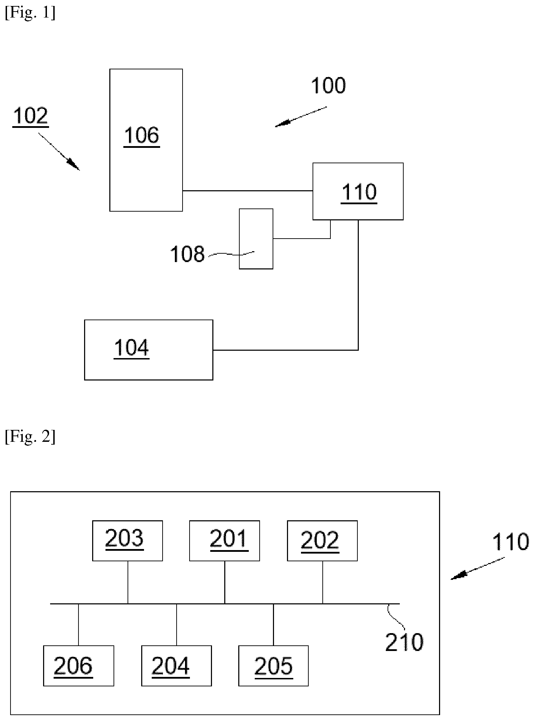

La Fig. 1 montre l'installation 100 qui comporte un distributeur d'aliments 102 qui est dédié à nourrir les animaux et qui comporte une auge 104 et un système de distribution 106 qui distribue des portions d'un aliment dans l'auge 104 qui est équipée d'un capteur permettant de détecter la présence ou l'absence d'aliment dans l'auge 104, le capteur peut être de tout type connu comme par exemple un capteur capacitif.

L'installation 100 comporte également un système d'identification 108 qui permet de recueillir une information d'identification stockée dans un élément d'identification fixé à l'animal. Le système d'identification 108 est par exemple un système RFID et l'élément d'identification est par exemple une puce RFID fixée à l'animal et qui rend l'animal unique dans l'élevage.

L'installation 100 comporte une unité de contrôle 110 qui est en communication avec le système d'identification 108 et qui reçoit l'information d'identification transmise par le système d'identification 108. À partir de l'information d'identification reçue, l'unité de contrôle 110 identifie l'animal présent devant le distributeur 102.

L'unité de contrôle 110 est également en communication avec le système de distribution 106 afin de le commander pour lui faire distribuer un aliment dans l'auge 104 et avec le capteur de l'auge 104 pour savoir si de l'aliment est présent ou non dans l'auge 104.

Ce type d'installation est classique en ce qui concerne le fonctionnement du distributeur, et en particulier, du système de distribution 106 et du système d'identification 108. Ces systèmes ne seront pas décrits plus précisément car ils peuvent prendre différentes formes connues de l'homme du métier. De la même manière, les communications entre l'unité de contrôle 110 et le système de distribution 106, d'une part, et le système d'identification 108, d'autre part, sont également des choses connues de l'homme du métier et peuvent prendre la forme de communications filaires ou sans fil.

L'installation 100 comporte également une base de données en communication avec l'unité de contrôle 110 et qui peut être stockée directement dans une mémoire de l'unité de contrôle 110 ou dans une mémoire externe à l'unité de contrôle 110.

La Fig. 2 illustre schématiquement un exemple d'architecture matérielle de l'unité de contrôle 110.

L'unité de contrôle 110 comporte alors, reliés par un bus de communication 210 : un processeur ou CPU (« Central Processing Unit » en anglais) 201 ; une mémoire vive RAM 202; une mémoire morte ROM 203 ; une unité de stockage 204 ou un lecteur de support de stockage, tel qu'un disque dur HDD (« Hard Disk Drive » en anglais) ; une interface de communication 205 permettant de communiquer avec les différents composants de l'installation 100 et une interface utilisateur UI (« User Interface » en anglais) 206 permettant à l'unité de contrôle 110 d'interagir avec un utilisateur, notamment pour configurer l'installation 100.

Le processeur 201 est capable d'exécuter des instructions chargées dans la RAM 202 à partir de la ROM 203, d'une mémoire externe, d'un support de stockage, ou d'un réseau de communication. Lorsque l'installation 100 est mise sous tension, le processeur 201 est capable de lire de la RAM 202 des instructions et de les exécuter. Ces instructions forment un programme d'ordinateur causant la mise en œuvre, par le processeur 201, de tout ou partie des algorithmes et étapes décrits ici en relation avec l'installation 100.

Tout ou partie des algorithmes et étapes décrits ci-après en relation avec l'installation 100 peut ainsi être implémenté sous forme logicielle par exécution d'un ensemble d'instructions par une machine programmable, telle qu'un DSP ou un processeur, ou être implémenté sous forme matérielle par une machine ou un composant dédié, tel qu'un FPGA ou un ASIC.

Dans la base de données sont stockées des informations liées à chaque animal et la base de données est gérée par l'exploitant.

Les informations stockées dans la base de données concernent pour chaque animal :

- la masse plafond d'aliment MP autorisée pour ledit animal pour une période donnée $\Delta T$, c'est-à-dire la masse totale d'aliments que l'animal peut recevoir pour la période donnée $\Delta T$, typiquement 24 heures,
- la masse minimale MM d'une ration c'est-à-dire la masse d'aliments au-dessus de laquelle une distribution d'aliment est autorisée,
- une masse d'aliment crédit MC c'est-à-dire la masse d'aliments que l'animal a encore le droit de manger, et
- le dernier instant 'To' auquel l'animal a reçu des aliments.

Le principe de distribution est basé sur un calcul linéaire avec le temps de la masse d'aliment crédit MC et une autorisation de distribution si la masse d'aliment crédit MC est supérieure à la masse minimale MM.

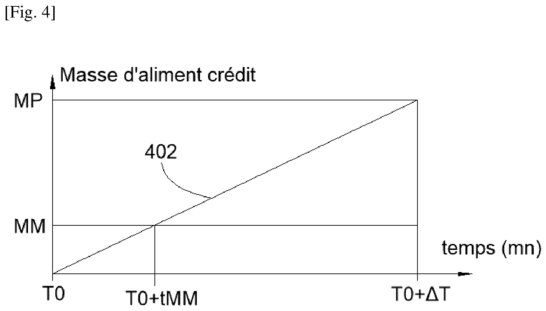

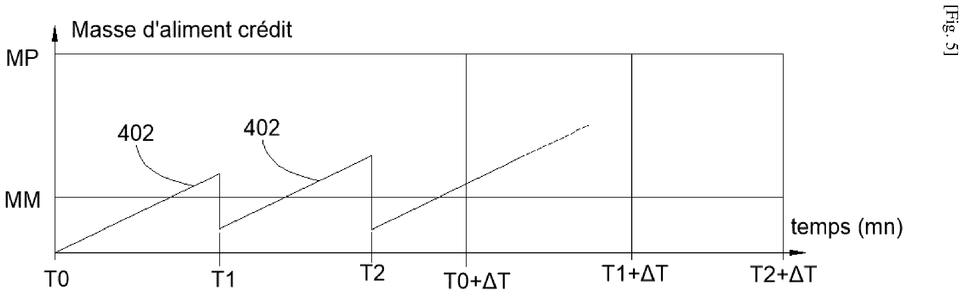

La Fig. 4 montre un exemple avec un premier animal consommant toute sa ration journalière en une seule prise et la Fig. 5 montre un exemple avec un deuxième animal consommant sa ration journalière en plusieurs prises.

Le procédé de distribution doit être vu comme une fenêtre temporelle d'une durée égale à la période donnée $\Delta T$ qui glisse à chaque prise de nourriture par l'animal.

Dans le cas de la Fig. 4, il y a une fenêtre qui va de $T_0$ à $T_0 + \Delta T$.

Dans le cas de la Fig. 5, il y a trois fenêtres qui se succèdent à chaque prise de nourriture. La première fenêtre débute à To, la deuxième fenêtre débute à la première prise $T_1 = T_0 + t_1$ et la troisième fenêtre débute à la deuxième prise $T_2 = T_0 + t_2$.

Sur la Fig. 5, à chaque prise de nourriture, le dernier instant de prise de nourriture est mis à jour et devient donc successivement $T_0$, $T_1$ et $T_2$.

Le repère montre la masse d'aliment crédit MC en fonction du temps durant la période donnée $\Delta T$, ici 24 heures, c'est-à-dire entre deux prises successives To et $T_0 + \Delta T$.

La masse plafond MP correspond à la masse totale d'aliments que l'animal peut recevoir pendant la période donnée $\Delta T$.

La masse minimale MM est la masse minimale au-dessous de laquelle aucun aliment ne peut être distribué à l'animal.

La droite 402 représente la masse d'aliment crédit MC qui est une fonction linéaire du temps qui a une pente donnée par la formule : $\dfrac{MP}{\Delta T}$

On appelle $MC_0$ la masse d'aliment crédit non consommé à la période précédente, c'est-à-dire la masse d'aliment crédit qui reste à consommer à l'instant To.

Dans le cas de la Fig. 4, $MC_0$ est égale à 0.

Dans le cas de la Fig. 5, $MC_0$ est égale à 0 à $T_0$, et différente de 0 à $T_1$ et $T_2$ et elle correspond à la masse non délivrée à $T_1$ et à $T_2$.

L'équation de chaque droite 402 est ainsi modifiée à chaque prise de nourriture To et son équation est donnée par la formule :

$$MC(t) = \frac{MP}{\Delta T} * (t - T_0) + MC_0 .$$

Le temps $t_{MM}$ écoulé depuis la dernière prise de nourriture To et correspondant à la masse minimale MM est alors donné par la formule :

$$t_{MM} = \frac{MM - MC_0}{MP} * \Delta T + T_0 .$$

C'est-à-dire que tant que le temps écoulé $t_{MM}$ depuis la dernière prise de nourriture ($T_0$) est inférieur à $\dfrac{MM - MC_0}{MP} * \Delta T + T_0$, il n'y pas de distribution et l'animal se retire sans manger.

Progressivement, chaque animal va adapter sa prise de nourriture en fonction de sa masse minimale MM et du temps passé depuis sa dernière prise sans chercher à prendre de la nourriture tant que la masse minimale MM n'est pas atteinte.

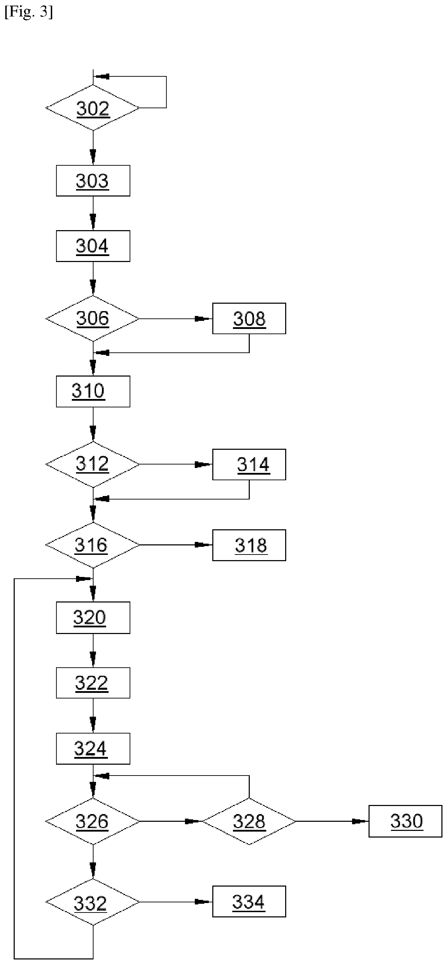

La Fig. 3 montre un algorithme du procédé de distribution selon l'invention.

Le procédé de distribution comporte une routine d'attente et d'identification 302, 303 au cours de laquelle l'unité de contrôle 110 détecte si un animal est présent, l'identifie et récupère les données relatives à l'animal identifié dans la base de données.

Dans le mode de réalisation de l'invention présenté ici, la routine d'attente comporte une étape d'attente 302 et une étape d'identification 303.

Au cours de l'étape d'attente 302, l'unité de contrôle 110 teste si un animal se présente devant l'auge 104 et le système d'identification 108.

Tant qu'aucun animal n'est présent, le procédé de distribution boucle sur l'étape d'attente 302.

Lorsqu'un animal est présent, le procédé de distribution se poursuit par l'étape d'identification 303 au cours de laquelle l'unité de contrôle 110 récupère l'identifiant de l'animal par analyse des données transmises par le système d'identification 108 et comparaison avec les données de la base de données.

A partir de cet identifiant, l'unité de contrôle 110 consulte la base de données pour récupérer l'instant To correspondant à la dernière prise de nourriture dudit animal, la masse plafond d'aliment MP dudit animal, la masse d'aliment crédit $MC_0$ non consommé à la période précédente, la masse minimale d'une ration MM

Lors de l'initialisation de l'installation 100, l'instant To de chaque animal est mis à 0 par exemple et toutes les autres données sont enregistrées dans la base de données par l'exploitant.

Le procédé de distribution se poursuit par une étape de mesure 304, au cours de laquelle l'unité de contrôle 110 mesure le temps 't' écoulé depuis l'instant To correspondant à la dernière prise de nourriture dudit animal.

Le procédé de distribution se poursuit par une première étape de calcul 310 au cours de laquelle l'unité de contrôle 110 calcule une nouvelle valeur de la masse d'aliment crédit MC avec la formule

$$MC(t) = \frac{MP}{\Delta T} * (t - T_0) + MC_0.$$

Le procédé de distribution se poursuit par une troisième étape de test 316 au cours de laquelle l'unité de contrôle 110 compare la masse d'aliment crédit MC ainsi calculée à la masse minimale MM.

Dans le cas où la masse d'aliment crédit MC est inférieure à la masse minimale MM, le procédé de distribution se poursuit par une étape d'arrêt 318 et de non distribution d'aliments.

Dans le cas où la masse d'aliment crédit MC est supérieure à la masse minimale MM, le procédé de distribution se poursuit par une étape de distribution 320 au cours de laquelle l'unité de contrôle 110 commande le système de distribution 106 pour lui faire distribuer une portion d'aliments dans l'auge 104. Le système de distribution 106 est arrangé pour délivrer une portion d'une masse réduite (environ 100g) et ainsi pour délivrer une masse d'aliment crédit éventuellement en plusieurs portions.

Le système de distribution 106 va délivrer successivement plusieurs portions pour que l'animal mange chaque portion l'une après l'autre jusqu'à satiété en laissant le moins possible dans l'auge 104. En effet, la délivrance d'une portion trop importante peut avoir comme effet, que l'animal ne mange pas toute la portion et en laisse une grande partie dans l'auge 104, faussant d'autant la quantité d'aliment qu'il a reçu. Les étapes suivantes mettent en œuvre ce principe de délivrances successives de portions.

Le procédé de distribution se poursuit par une deuxième étape de calcul 322 au cours de laquelle l'unité de contrôle 110 calcule une nouvelle valeur de la masse d'aliment crédit MC par soustraction de la masse de la portion distribuée.

Le procédé de distribution se poursuit par une étape de mise à jour 324 au cours de laquelle l'unité de contrôle 110 met à jour la valeur de l'instant To correspondant à la dernière prise de nourriture avec la valeur de l'instant 't' et lui affecte alors la valeur « $T_0$+t » qui devient le nouvel instant To correspondant à la dernière prise de nourriture.

Le procédé de distribution se poursuit par une routine de boucle 326, 338, 332 au cours de laquelle tant que l'animal est présent, qu'il n'y a pas d'aliment dans l'auge 104 (c'est-à-dire que l'auge 104 est vide) et que la masse d'aliment crédit MC est positive, le procédé de distribution boucle sur l'étape de distribution 320.

Un tel procédé de distribution permet alors une meilleure gestion de la présence des animaux au niveau de l'auge 104 du fait que chacun apprend à partir de quand il peut venir.

L'unité de contrôle 110 comporte ainsi :

- des moyens d'attente et d'identification permettant à l'unité de contrôle 110 à partir des informations délivrées par le système d'identification 108 de détecter si un animal est présent, l'identifier et récupérer les données relatives à l'animal identifié dans la base de données,

- des moyens de mesure permettant à l'unité de contrôle 110 de mesurer le temps 't' écoulé depuis l'instant To correspondant à la dernière prise de nourriture dudit animal,

- des premiers moyens de calcul permettant à l'unité de contrôle 110 de calculer une nouvelle valeur de la masse d'aliment crédit MC avec la formule

$$MC(t) = \frac{MP}{\Delta T} * (t - T_0) + MC_0,$$

- des troisièmes moyens de test permettant à l'unité de contrôle 110 de comparer la masse d'aliment crédit MC à la masse minimale MM,

- des moyens de distribution permettant, dans le cas où la masse d'aliment crédit MC est supérieure à la masse minimale MM, à l'unité de contrôle 110 de commander le système de distribution 106 pour lui faire distribuer une portion d'aliment dans l'auge 104,

- des deuxièmes moyens de calcul permettant à l'unité de contrôle 110 de calculer une nouvelle valeur de la masse d'aliment crédit MC par soustraction de la masse de la portion distribuée, et

- des moyens de mise à jour permettant à l'unité de contrôle 110 de mettre à jour la valeur de l'instant To correspondant à la dernière prise de nourriture avec la valeur de l'instant 't' et de lui affecter la valeur « To+t ».

Dans le mode de réalisation de l'invention présenté ici, la routine de boucle comporte à la suite de l'étape de mise à jour 324, une quatrième étape de test

326 au cours de laquelle l'unité de contrôle 110 détermine s'il y a de l'aliment dans l'auge 104 ou non à partir des informations reçues du capteur de l'auge 104.

Dans le cas où il y a des aliments dans l'auge 104 (c'est-à-dire que l'auge 104 n'est pas vide), la routine de boucle se poursuit par une cinquième étape de test 328 au cours de laquelle l'unité de contrôle 110 vérifie si l'animal est toujours présent devant l'auge 104 et le système d'identification 108 par analyse des données transmises par le système d'identification 108.

Dans le cas où l'animal n'est plus présent, la routine de boucle se poursuit par une étape d'arrêt 330.

Dans le cas où l'animal est présent, la routine de boucle boucle sur la quatrième étape de test 326.

Dans le cas où il n'y a pas d'aliment dans l'auge 104 (c'est-à-dire que l'auge 104 est vide), la routine de boucle se poursuit par une sixième étape de test 332 au cours de laquelle l'unité de contrôle teste la valeur de la masse d'aliment crédit MC par rapport à 0.

Dans le cas où la masse d'aliment crédit MC est négative ou nulle, cela signifie que l'animal a reçu toute la masse d'aliment crédit MC à laquelle il avait droit et la routine de boucle se poursuit par une étape d'arrêt 334.

Dans le cas où la masse d'aliment crédit MC est positive, cela signifie que l'animal n'a pas reçu toute la masse d'aliment crédit MC à laquelle il avait droit et la routine de boucle boucle sur l'étape de distribution 320.

La routine de boucle peut être réalisée de différentes manières. Par exemple, les différentes étapes de test peuvent être imbriquées selon une organisation différente.

Par exemple après l'étape de mise à jour 324, la routine de boucle se poursuit avec successivement la cinquième étape de test 328 consistant à tester la présence de l'animal, puis la quatrième étape de test 326 consistant à tester la présence ou l'absence d'aliment dans l'auge 104, et enfin la sixième étape de test 332 consistant à tester la masse d'aliment crédit.

Le passage de la cinquième étape de test 328 à la quatrième étape de test 326 s'effectuant lorsque l'animal est présent, le passage de la quatrième étape de test 326 à la sixième étape de test 332 s'effectuant lorsqu'il n'y a plus d'aliment dans l'auge 104, c'est-à-dire qu'elle est vide.

Lorsque l'animal n'est plus présent, la cinquième étape de test 328 se poursuit par l'étape d'arrêt 330. Tant qu'il y a de l'aliment dans l'auge 104, la quatrième étape de test 326 boucle sur la cinquième étape de test 328. Tant que la masse d'aliment crédit MC est positive, la sixième étape de test 332 boucle sur l'étape de distribution 320.

Dans ce mode de réalisation, l'unité de contrôle 110 comporte en outre :

- des quatrièmes moyens de test permettant à l'unité de contrôle 110 de déterminer si de l'aliment est présent ou non dans l'auge 104 à partir des informations délivrées par le capteur,

- des cinquièmes moyens de test permettant à l'unité de contrôle 110 à partir des informations délivrées par le système d'identification 108 de vérifier si un animal est présent devant l'auge 104 et le système d'identification 108, et
- des sixièmes moyens de test permettant à l'unité de contrôle 110 de tester la valeur de la masse d'aliment crédit MC par rapport à 0.

Selon un mode de réalisation particulier, il faut prévenir le fait que l'animal attend plus longtemps que la période donnée ΔT pour se nourrir. A cette fin, le procédé de distribution comporte à la suite de l'étape de mesure 304, une première étape de test 306 au cours de laquelle l'unité de contrôle 110 compare le temps écoulé 't' à la période donnée ΔT, et une première étape d'harmonisation 308 au cours de laquelle l'unité de contrôle 110 affecte au temps écoulé 't' la valeur de ΔT lorsque le temps écoulé 't' est supérieur à la période donnée ΔT, et lorsque le temps écoulé 't' est inférieur à la période donnée ΔT ou après la première étape d'harmonisation 308, le procédé de distribution se poursuit par la première étape de calcul 310.

Dans ce mode de réalisation, l'unité de contrôle 110 comporte en outre des premiers moyens de test permettant à l'unité de contrôle 110 de comparer le temps écoulé 't' à la période donnée ΔT, et des premiers moyens d'harmonisation permettant à l'unité de contrôle 110 d'affecter au temps écoulé 't' la valeur de ΔT lorsque le temps écoulé 't' est supérieur à la période donnée ΔT.

Selon un mode de réalisation particulier, il faut prévenir le fait que l'animal avait un reste de nourriture non consommé et a attendu la période donnée ΔT pour se nourrir. A cette fin, le procédé de distribution comporte à la suite de la première étape de calcul 310, une deuxième étape de test 312 au cours de laquelle l'unité de contrôle 110 compare la masse d'aliment crédit MC ainsi calculée et la masse plafond d'aliment MP, et une deuxième étape d'harmonisation 314 au cours de laquelle l'unité de contrôle 110 affecte à la masse d'aliment crédit MC ainsi calculée la valeur de la masse plafond d'aliment MP lorsque la masse d'aliment crédit MC est supérieure à la masse plafond d'aliment MP, et lorsque la masse d'aliment crédit MC est inférieure à la masse plafond d'aliment MP ou après la deuxième étape d'harmonisation 314, le procédé de distribution se poursuit par la troisième étape de test 316.

Dans ce mode de réalisation, l'unité de contrôle 110 comporte en outre des deuxièmes moyens de test permettant à l'unité de contrôle 110 de comparer la masse d'aliment crédit MC et la masse plafond d'aliment MP, des deuxièmes moyens d'harmonisation permettant à l'unité de contrôle 110 d'affecter à la masse d'aliment crédit MC la valeur de la masse plafond d'aliment MP lorsque la masse d'aliment crédit MC est supérieure à la masse plafond d'aliment MP.

La mesure du temps écoulé est réalisée par exemple par une routine implémentée dans l'unité de contrôle 110 et mettant en œuvre un moyen de mesure du temps écoulé comme par exemple un chronomètre.

## Revendications

1. Installation d'élevage (100) d'animaux, chacun portant un élément d'identification, ladite installation (100) comportant :

   - une auge (104) équipée d'un capteur permettant de détecter la présence ou l'absence d'aliment dans l'auge (104),
   - un système de distribution (106) agencé pour distribuer des portions d'un aliment dans l'auge (104),
   - un système d'identification (108) permettant de recueillir une information d'identification stockée dans l'élément d'identification,
   - une base de données contenant pour chaque animal la masse plafond d'aliment MP autorisée pour ledit animal pour une période donnée $\Delta T$, une masse minimale MM d'une ration, une masse d'aliment crédit MC, et un instant 'To' correspondant au dernier instant auquel l'animal a reçu des aliments, et
   - une unité de contrôle (110) en communication avec le capteur de l'auge (104), le système de distribution (106), le système d'identification (108) et la base de données, l'unité de contrôle (110) comportant :

     - des moyens d'attente et d'identification permettant à l'unité de contrôle (110) à partir des informations délivrées par le système d'identification (108) de détecter si un animal est présent, l'identifier et récupérer les données relatives à l'animal identifié dans la base de données,
     - des moyens de mesure permettant à l'unité de contrôle (110) de mesurer le temps 't' écoulé depuis l'instant To correspondant à la dernière prise de nourriture dudit animal,
     - des premiers moyens de calcul permettant à l'unité de contrôle (110) de calculer une nouvelle valeur de la masse d'aliment crédit MC avec la formule

$$MC(t) = \frac{MP}{\Delta T} * (t - T_0) + MC_0,$$ où

     $MC_0$ est une masse d'aliment crédit qui reste à consommer à l'instant To,
     - des troisièmes moyens de test permettant à l'unité de contrôle (110) de comparer la masse d'aliment crédit MC à la masse minimale MM,
     - des moyens de distribution permettant, dans le cas où la masse d'aliment crédit MC est supérieure à la masse minimale MM, à l'unité de contrôle (110) de commander le système de distribution (106) pour lui faire distribuer une portion d'aliments dans l'auge (104),
   - des deuxièmes moyens de calcul permettant à l'unité de contrôle (110) de calculer une nouvelle valeur de la masse d'aliment crédit MC par soustraction de la masse de la portion distribuée, et
   - des moyens de mise à jour permettant à l'unité de contrôle (110) de mettre à jour la valeur de l'instant To correspondant à la dernière prise de nourriture avec la valeur de l'instant 't' et de lui affecter la valeur « $T_0$+t ».

2. Installation d'élevage (100) selon la revendication 1, **caractérisée en ce que** l'unité de contrôle (110) comporte en outre :

   - des quatrièmes moyens de test permettant à l'unité de contrôle (110) de déterminer si de l'aliment est présent ou non dans l'auge (104) à partir des informations délivrées par le capteur,
   - des cinquièmes moyens de test permettant à l'unité de contrôle (110) à partir des informations délivrées par le système d'identification (108) de vérifier si un animal est présent devant l'auge (104) et le système d'identification (108), et
   - des sixièmes moyens de test permettant à l'unité de contrôle (110) de tester la valeur de la masse d'aliment crédit MC par rapport à 0.

3. Installation d'élevage (100) selon l'une des revendications 1 ou 2, **caractérisée en ce que** l'unité de contrôle (110) comporte en outre des premiers moyens de test permettant à l'unité de contrôle (110) de comparer le temps écoulé 't' à la période donnée $\Delta T$, et des premiers moyens d'harmonisation permettant à l'unité de contrôle (110) d'affecter au temps écoulé 't' la valeur de $\Delta T$ lorsque le temps écoulé 't' est supérieur à la période donnée $\Delta T$.

4. Installation d'élevage (100) selon la revendication 3, **caractérisée en ce que** l'unité de contrôle (110) comporte en outre des deuxièmes moyens de test permettant à l'unité de contrôle (110) de comparer la masse d'aliment crédit MC et la masse plafond d'aliment MP, des deuxièmes moyens d'harmonisation permettant à l'unité de contrôle (110) d'affecter à la masse d'aliment crédit MC la valeur de la masse plafond d'aliment MP lorsque la masse d'aliment crédit MC est supérieure à la masse plafond d'aliment MP.

5. Procédé de distribution mis en œuvre dans une installation (100) selon l'une des revendications précédentes, ledit procédé de distribution comportant :

- une routine d'attente et d'identification (302, 303) au cours de laquelle l'unité de contrôle (110) détecte si un animal est présent, l'identifie et récupère les données relatives à l'animal identifié dans la base de données,
- une étape de mesure (304), au cours de laquelle l'unité de contrôle (110) mesure le temps 't' écoulé depuis l'instant $T_0$ correspondant à la dernière prise de nourriture dudit animal,
- une première étape de calcul (310) au cours de laquelle l'unité de contrôle (110) calcule une nouvelle valeur de la masse d'aliment crédit MC avec la formule

$$MC(t) = \frac{MP}{\Delta T} * (t - T_0) + MC_0,$$ où $MC_0$

est une masse d'aliment crédit qui reste à consommer à l'instant To,
- une troisième étape de test (316) au cours de laquelle l'unité de contrôle (110) compare la masse d'aliment crédit MC ainsi calculée à la masse minimale MM,
- une étape d'arrêt (318) dans le cas où la masse d'aliment crédit MC est inférieure à la masse minimale MM,
- une étape de distribution (320) dans le cas où la masse d'aliment crédit MC est supérieure à la masse minimale MM, et au cours de laquelle l'unité de contrôle (110) commande le système de distribution (106) pour lui faire distribuer une portion d'aliments dans l'auge (104),
- une deuxième étape de calcul (322) au cours de laquelle l'unité de contrôle (110) calcule une nouvelle valeur de la masse d'aliment crédit MC par soustraction de la masse de la portion distribuée,
- une étape de mise à jour (324) au cours de laquelle l'unité de contrôle (110) met à jour la valeur de l'instant To correspondant à la dernière prise de nourriture avec la valeur de l'instant 't' et lui affecte la valeur « $T_0$+t », et
- une routine de boucle (326, 338, 332) au cours de laquelle tant que l'animal est présent, qu'il n'y a pas d'aliment dans l'auge (104) et que la masse d'aliment crédit MC est positive, le procédé de distribution boucle sur l'étape de distribution (320).

6. Procédé de distribution selon la revendication 5, **caractérisé en ce que** la routine de boucle comporte à la suite de l'étape de mise à jour (324) :

- une quatrième étape de test (326) au cours de laquelle l'unité de contrôle (110) détermine s'il y a de l'aliment dans l'auge (104) ou non,

- dans le cas où il y a de l'aliment dans l'auge (104), la routine de boucle se poursuit par une cinquième étape de test (328) au cours de laquelle l'unité de contrôle (110) vérifie si l'animal est toujours présent devant l'auge (104) et le système d'identification (108),
- dans le cas où l'animal n'est plus présent, la routine de boucle se poursuit par une étape d'arrêt (330),
- dans le cas où l'animal est présent, la routine de boucle boucle sur la quatrième étape de test (326),
- dans le cas où il n'y a pas d'aliment dans l'auge (104), la routine de boucle se poursuit par une sixième étape de test (332) au cours de laquelle l'unité de contrôle teste la valeur de la masse d'aliment crédit MC par rapport à 0,
- dans le cas où la masse d'aliment crédit MC est négative ou nulle, la routine de boucle se poursuit par une étape d'arrêt (334), et
- dans le cas où la masse d'aliment crédit MC est positive, la routine de boucle boucle sur l'étape de distribution (320).

7. Procédé de distribution selon l'une des revendications 5 ou 6, **caractérisé en ce qu'**il comporte à la suite de l'étape de mesure (304), une première étape de test (306) au cours de laquelle l'unité de contrôle (110) compare le temps écoulé 't' à la période donnée $\Delta T$, et une première étape d'harmonisation (308) au cours de laquelle l'unité de contrôle (110) affecte au temps écoulé 't' la valeur de $\Delta T$ lorsque le temps écoulé 't' est supérieur à la période donnée $\Delta T$, et où lorsque le temps écoulé 't' est inférieur à la période donnée $\Delta T$ ou après la première étape d'harmonisation (308), le procédé de distribution se poursuit par la première étape de calcul (310).

8. Procédé de distribution selon la revendication 7, **caractérisé en ce qu'**il comporte à la suite de la première étape de calcul (310), une deuxième étape de test (312) au cours de laquelle l'unité de contrôle (110) compare la masse d'aliment crédit MC et la masse plafond d'aliment MP, et une deuxième étape d'harmonisation (314) au cours de laquelle l'unité de contrôle (110) affecte à la masse d'aliment crédit MC la valeur de la masse plafond d'aliment MP lorsque la masse d'aliment crédit MC est supérieure à la masse plafond d'aliment MP, et où lorsque la masse d'aliment crédit MC est inférieure à la masse plafond d'aliment MP ou après la deuxième étape d'harmonisation (314), le procédé de distribution se poursuit par la troisième étape de test (316).

**Patentansprüche**

1. Zuchtanlage (100) von Tieren, die je ein Identifikationselement tragen, wobei die Anlage (100) aufweist:

- einen Trog (104), der mit einem Sensor ausgestattet ist, der es ermöglicht, das Vorhandensein oder das Fehlen von Futter im Trog (104) zu erfassen,
- ein Ausgabesystem (106), das eingerichtet ist, um Portionen eines Futters in den Trog (104) auszugeben,
- ein Identifikationssystem (108), das es ermöglicht, eine im Identifikationselement gespeicherte Identifikationsinformation zu erhalten,
- eine Datenbank, die für jedes Tier die Futterhöchstmasse MP, die für das Tier für einen gegebenen Zeitraum ΔT erlaubt ist, eine Mindestmasse MM einer Ration, eine Futterguthabenmasse MC und einen Zeitpunkt 'To' entsprechend dem letzten Zeitpunkt enthält, zu dem das Tier Futter bekommen hat, und
- eine Kontrolleinheit (110) in Kommunikation mit dem Sensor des Trogs (104), dem Ausgabesystem (106), dem Identifikationssystem (108) und der Datenbank, wobei die Kontrolleinheit (110) aufweist:

  - Warte- und Identifikationseinrichtungen, die es der Kontrolleinheit (110) ausgehend von den vom Identifikationssystem (108) gelieferten Informationen erlauben, zu erfassen, ob ein Tier anwesend ist, es zu identifizieren und die Daten bezüglich des identifizierten Tiers in der Datenbank abzurufen,
  - Messeinrichtungen, die es der Kontrolleinheit (110) ermöglichen, die seit dem Zeitpunkt To entsprechend der letzten Futteraufnahme des Tiers vergangene Zeit 't' zu messen,
  - erste Recheneinrichtungen, die es der Kontrolleinheit (110) ermöglichen, einen neuen Wert der Futterguthabenmasse MC mit der Formel

$$MC(t) = \frac{MP}{\Delta T} * (t - T_0) + MC_0$$

  zu berechnen, wobei $MC_0$ eine Futterguthabenmasse ist, die zum Zeitpunkt $T_0$, zu verzehren bleibt,
  - dritte Testeinrichtungen, die es der Kontrolleinheit (110) ermöglichen, die Futterguthabenmasse MC mit der Mindestmasse MM zu vergleichen,
  - Ausgabeeinrichtungen, die es in dem Fall, in dem die Futterguthabenmasse MC größer ist als die Mindestmasse MM, der Kontrolleinheit (110) ermöglichen, das Ausgabesystem (106) zu steuern, um es eine Futterportion in den Trog (104) ausgeben zu lassen,

  - zweite Recheneinrichtungen, die es der Kontrolleinheit (110) ermöglichen, einen neuen Wert der Futterguthabenmasse MC durch Subtraktion der Masse der ausgegebenen Portion zu berechnen, und
  - Aktualisierungseinrichtungen, die es der Kontrolleinheit (110) ermöglichen, den Wert des Zeitpunkts To entsprechend der letzten Futteraufnahme mit dem Wert des Zeitpunkts 't' zu aktualisieren und ihm den Wert "$T_0$+t" zuzuweisen.

2. Zuchtanlage (100) nach Anspruch 1, **dadurch gekennzeichnet, dass** die Kontrolleinheit (110) außerdem aufweist:

   - vierte Testeinrichtungen, die es der Kontrolleinheit (110) ausgehend von den vom Sensor gelieferten Informationen ermöglichen zu bestimmen, ob Futter im Trog (104) vorhanden ist oder nicht,
   - fünfte Testeinrichtungen, die es der Kontrolleinheit (110) ausgehend von den vom Identifikationssystem (108) gelieferten Informationen ermöglichen zu überprüfen, ob ein Tier sich vor dem Trog (104) und dem Identifikationssystem (108) befindet, und
   - sechste Testeinrichtungen, die es der Kontrolleinheit (110) ermöglichen, den Wert der Futterguthabenmasse MC in Bezug auf 0 zu testen.

3. Zuchtanlage (100) nach einem der Ansprüche 1 oder 2, **dadurch gekennzeichnet, dass** die Kontrolleinheit (110) außerdem erste Testeinrichtungen, die es der Kontrolleinheit (110) ermöglichen, die vergangene Zeit 't' mit dem gegebenen Zeitraum ΔT zu vergleichen, und erste Harmonisierungseinrichtungen aufweist, die es der Kontrolleinheit (110) ermöglichen, der vergangenen Zeit 't' den Wert von ΔT zuzuweisen, wenn die vergangene Zeit 't' länger als der gegebene Zeitraum ΔT ist.

4. Zuchtanlage (100) nach Anspruch 3, **dadurch gekennzeichnet, dass** die Kontrolleinheit (110) außerdem zweite Testeinrichtungen aufweist, die es der Kontrolleinheit (110) ermöglichen, die Futterguthabenmasse MC und die Futterhöchstmasse MP zu vergleichen, wobei zweite Harmonisierungseinrichtungen es der Kontrolleinheit (110) ermöglichen, der Futterguthabenmasse MC den Wert der Futterhöchstmasse MP zuzuweisen, wenn die Futterguthabenmasse MC größer ist als die Futterhöchstmasse MP.

5. Ausgabeverfahren, das in einer Anlage (100) nach einem der vorhergehenden Ansprüche eingesetzt wird, wobei das Ausgabeverfahren aufweist:

- eine Warte- und Identifikationsroutine (302, 303), während der die Kontrolleinheit (110) erfasst, ob ein Tier anwesend ist, es identifiziert und die das identifizierte Tier betreffenden Daten in der Datenbank abruft,
- einen Messschritt (304), während dessen die Kontrolleinheit (110) die seit dem Zeitpunkt To entsprechend der letzten Futteraufnahme des Tiers vergangene Zeit 't' misst,
- einen ersten Rechenschritt (310), während dessen die Kontrolleinheit (110) einen neuen Wert der Futterguthabenmasse MC mit der Formel

$$MC(t) = \frac{MP}{\Delta T} * (t - T_0) + MC_0$$

berechnet, wobei $MC_0$ eine Futterguthabenmasse ist, die zum Zeitpunkt $T_0$, zu verzehren bleibt,
- einen dritten Testschritt (316), während dessen die Kontrolleinheit (110) die so berechnete Futterguthabenmasse MC mit der Mindestmasse MM vergleicht,
- einen Stoppschritt (318) in dem Fall, in dem die Futterguthabenmasse MC geringer ist als die Mindestmasse MM,
- einen Ausgabeschritt (320) in dem Fall, in dem die Futterguthabenmasse MC größer ist als die Mindestmasse MM, und während dessen die Kontrolleinheit (110) das Ausgabesystem (106) steuert, um es eine Futterportion in den Trog (104) ausgeben zu lassen,
- einen zweiten Rechenschritt (322), während dessen die Kontrolleinheit (110) einen neuen Wert der Futterguthabenmasse MC durch Subtraktion der Masse der ausgegebenen Portion berechnet,
- einen Aktualisierungsschritt (324), während dessen die Kontrolleinheit (110) den Wert des Zeitpunkts $T_0$ entsprechend der letzten Futteraufnahme mit dem Wert des Zeitpunkts 't' aktualisiert und ihm den Wert "$T_{0+t}$" zuweist, und
- eine Schleifenroutine (326, 338, 332), während der, so lange das Tier anwesend ist, kein Futter im Trog (104) und die Futterguthabenmasse MC positiv ist, das Ausgabeverfahren zum Ausgabeschritt (320) zurückkehrt.

6. Ausgabeverfahren nach Anspruch 5, **dadurch gekennzeichnet, dass** die Schleifenroutine nach dem Aktualisierungsschritt (324) aufweist:

- einen vierten Testschritt (326), während dessen die Kontrolleinheit (110) bestimmt, ob es Futter im Trog (104) gibt oder nicht,
- in dem Fall, in dem es Futter im Trog (104) gibt, setzt sich die Schleifenroutine durch einen fünften Testschritt (328) fort, während dessen die Kontrolleinheit (110) überprüft, ob das Tier sich immer noch vor dem Trog (104) und dem Identifikationssystem (108) befindet,
- in dem Fall, in dem das Tier nicht mehr anwesend ist, setzt die Schleifenroutine sich durch einen Stoppschritt (330) fort,
- in dem Fall, in dem das Tier anwesend ist, kehrt die Schleifenroutine zum vierten Testschritt (326) zurück,
- in dem Fall, in dem es kein Futter im Trog (104) gibt, setzt die Schleifenroutine sich durch einen sechsten Testschritt (332) fort, während dessen die Kontrolleinheit den Wert der Futterguthabenmasse MC in Bezug auf 0 testet,
- in dem Fall, in dem die Futterguthabenmasse MC negativ oder Null ist, setzt die Schleifenroutine sich durch einen Stoppschritt (334) fort, und
- in dem Fall, in dem die Futterguthabenmasse MC positiv ist, kehrt die Schleifenroutine zum Ausgabeschritt (320) zurück.

7. Ausgabeverfahren nach einem der Ansprüche 5 oder 6, **dadurch gekennzeichnet, dass** es nach dem Messschritt (304) einen ersten Testschritt (306), während dessen die Kontrolleinheit (110) die vergangene Zeit 't' mit dem gegebenen Zeitraum ΔT vergleicht, und einen ersten Harmonisierungsschritt (308) aufweist, während dessen die Kontrolleinheit (110) der vergangenen Zeit 't' den Wert von ΔT zuweist, wenn die vergangene Zeit 't' länger ist als der gegebene Zeitraum ΔT, und wobei, wenn die vergangene Zeit 't' kürzer ist als der gegebene Zeitraum ΔT oder nach dem ersten Harmonisierungsschritt (308), das Ausgabeverfahren durch den ersten Rechenschritt (310) fortgesetzt wird.

8. Ausgabeverfahren nach Anspruch 7, **dadurch gekennzeichnet, dass** es nach dem ersten Rechenschritt (310) einen zweiten Testschritt (312), während dessen die Kontrolleinheit (110) die Futterguthabenmasse MC und die Futterhöchstmasse MP vergleicht, und einen zweiten Harmonisierungsschritt (314) aufweist, während dessen die Kontrolleinheit (110) der Futterguthabenmasse MC den Wert der Futterhöchstmasse MP zuweist, wenn die Futterguthabenmasse MC größer ist als die Futterhöchstmasse MP, und wobei, wenn die Futterguthabenmasse MC kleiner ist als die Futterhöchstmasse MP oder nach dem zweiten Harmonisierungsschritt (314), das Ausgabeverfahren durch den dritten Testschritt (316) fortgesetzt wird.

## Claims

1. Apparatus (100) for farming animals, each bearing one identification element, said apparatus (100) comprising:

- a trough (104) equipped with a sensor allowing the presence or absence of feed in the trough (104) to be detected,
- a distributing system (106) arranged to distribute portions of a feed to the trough (104),
- an identifying system (108) allowing identification information stored in the identification element to be retrieved,
- a database containing, for each animal, the ceiling feed weight MP permitted for said animal for a given period ΔT, a minimum weight MM of a ration, a credit feed weight MC, and a time 'To' corresponding to the last time at which the animal received feed, and
- a control unit (110) that is in communication with the sensor of the trough (104), the distributing system (106), the identifying system (108) and the database, the control unit (110) comprising:

> - identifying and waiting means allowing the control unit (110), on the basis of the information delivered by the identifying system (108), to detect whether an animal is present, to identify it and to retrieve the data relating to the identified animal from the database,
> - measuring means allowing the control unit (110) to measure the time 't' passed since the time To corresponding to the last feed of said animal,
> - first computing means allowing the control unit (110) to compute a new value of the credit feed weight MC with the formula
>
> $$MC(t) = \frac{MP}{\Delta T} * (t - T_0) + MC_0 ,$$
>
> where $MC_0$ is a credit feed weight that remains to be consumed at the time To,
> - third testing means allowing the control unit (110) to compare the credit feed weight MC to the minimum weight MM,
> - distributing means allowing, in the case where the credit feed weight MC is higher than the minimum weight MM, the control unit (110) to command the distributing system (106) in order to make it distribute a portion of feed to the trough (104),
> - second computing means allowing the control unit (110) to compute a new value of the credit feed weight MC via subtraction of the weight of the distributed portion, and
> - updating means allowing the control unit (110) to update the value of the time To corresponding to the last feed with the value of the time 't' and to assign to the latter the value "$T_0$+t".

2. Farming apparatus (100) according to Claim 1, **char-**

**acterized in that** the control unit (110) furthermore comprises:

> - fourth testing means allowing the control unit (110) to determine whether feed is present or not in the trough (104) on the basis of information delivered by the sensor,
> - fifth testing means allowing the control unit (110), on the basis of the information delivered by the identifying system (108), to verify whether an animal is present in front of the trough (104) and the identifying system (108), and
> - sixth testing means allowing the control unit (110) to test the value of the credit feed weight MC with respect to 0.

3. Farming apparatus (100) according to either Claim 1 or Claim 3, **characterized in that** the control unit (110) furthermore comprises first testing means allowing the control unit (110) to compare the time passed 't' to the given period ΔT, and first harmonizing means allowing the control unit (110) to assign, to the time passed 't', the value of ΔT when the time passed 't' is greater than the given period ΔT.

4. Farming apparatus (100) according to Claim 3, **characterized in that** the control unit (110) furthermore comprises second testing means allowing the control unit (110) to compare the credit feed weight MC and the ceiling feed weight MP, and second harmonizing means allowing the control unit (110) to assign, to the credit feed weight MC, the value of the ceiling feed weight MP when the credit feed weight MC is higher than the ceiling feed weight MP.

5. Distributing method implemented in an apparatus (100) according to one of the preceding Claims, said distributing method comprising:

> - an identifying and waiting routine (302, 303) in which the control unit (110) detects whether an animal is present, identifies it and retrieves the data relating to the identified animal from the database,
> - a measuring step (304), in which the control unit (110) measures the time 't' passed since the time To corresponding to the last feed of said animal,
> - a first computing step (310) in which the control unit (110) computes a new value of the credit feed weight MC with the formula
>
> $$MC(t) = \frac{MP}{\Delta T} * (t - T_0) + MC_0 , \text{ where}$$
>
> $MC_0$ is a credit feed weight that remains to be consumed at the time To,
> - a third testing step (316) in which the control unit (110) compares the credit feed weight MC thus computed to the minimum weight MM,
- a stopping step (318) in the case where the credit feed weight MC is lower than the minimum weight MM,
- a distributing step (320) in the case where the credit feed weight MC is higher than the minimum weight MM, and in which the control unit (110) commands the distributing system (106) in order to make it distribute a portion of feed to the trough (104),
- a second computing step (322) in which the control unit (110) computes a new value of the credit feed weight MC via subtraction of the weight of the distributed portion,
- an updating step (324) in which the control unit (110) updates the value of the time To corresponding to the last feed with the value of the time 't' and assigns to the latter the value "$T_0+t$", and
- a looping routine (326, 338, 332) in which, provided that the animal is present, that there is no feed in the trough (104) and that the credit feed weight MC is positive, the distributing method loops to the distributing step (320).

6. Distributing method according to Claim 5, **characterized in that** the looping routine comprises, following the updating step (324):

    - a fourth testing step (326) in which the control unit (110) determines whether there is feed in the trough (104) or not,
    - in the case where there is feed in the trough (104), the looping routine continues to a fifth testing step (328) in which the control unit (110) verifies whether the animal is still present in front of the trough (104) and the identifying system (108),
    - in the case where the animal is no longer present, the looping routine continues to a stopping step (330),
    - in the case where the animal is present, the looping routine loops to the fourth testing step (326),
    - in the case where there is no feed in the trough (104), the looping routine continues to a sixth testing step (332) in which the control unit tests the value of the credit feed weight MC with respect to 0,
    - in the case where the credit feed weight MC is negative or zero, the looping routine continues to a stopping step (334), and
    - in the case where the credit feed weight MC is positive, the looping routine loops to the distributing step (320).

7. Distributing method according to either Claim 5 or Claim 6, **characterized in that** it comprises, following the measuring step (304), a first testing step (306) in which the control unit (110) compares the time passed 't' to the given period $\Delta T$, and a first harmonizing step (308) in which the control unit (110) assigns, to the time passed 't', the value of $\Delta T$ when the time passed 't' is greater than the given period $\Delta T$, and whereby, when the time passed 't' is less than the given period $\Delta T$ or after the first harmonizing step (308), the distributing method continues to the first computing step (310).

8. Distributing method according to Claim 7, **characterized in that** it comprises, following the first computing step (310), a second testing step (312) in which the control unit (110) compares the credit feed weight MC and the ceiling feed weight MP, and a second harmonizing step (314) in which the control unit (110) assigns, to the credit feed weight MC, the value of the ceiling feed weight MP when the credit feed weight MC is higher than the ceiling feed weight MP, and whereby, when the credit feed weight MC is lower than the ceiling feed weight MP or after the second harmonizing step (314), the distributing method continues to the third testing step (316).

[Fig. 1]

[Fig. 2]

[Fig. 3]

[Fig. 4]

[Fig. 5]

**EP 3 900 526 B1**

## RÉFÉRENCES CITÉES DANS LA DESCRIPTION

**Documents brevets cités dans la description**

- EP 1300074 A2

- US 2014000522 A1